# EUROPEAN PATENT APPLICATION

(11) **EP 4 201 173 A1**
(43) Date of publication of application: **28.06.2023**
(21) Application number: 21858129.6
(22) Date of filing: 28.07.2021
(51) Int. Cl.: A01B 69/00, G05D 1/02, G01S 19/04, G01S 19/06, G01S 19/41, G01C 21/28

(54) **POSITIONING DEVICE, WORK VEHICLE, POSITIONING METHOD, AND POSITIONING PROGRAM**

(30) Priority: 21.08.2020 JP 2020139843
(71) Applicant: Yanmar Holdings Co., Ltd., Osaka-shi, Osaka 530-0013 (JP)
(72) Inventor: MATSUMOTO Keiji, Osaka-shi, Osaka 530-0013 (JP); NISHINO Mitsuya, Osaka-shi, Osaka 530-0013 (JP); KUSUNO Junya, Osaka-shi, Osaka 530-0013 (JP); TERAKAWA Takashi, Osaka-shi, Osaka 530-0013 (JP)
(74) Representative: Novagraaf International SA
(86) International application number: PCT/JP2021/027860
(87) International publication number: WO 2022/038980

(57) **Abstract**

A first positioning processing unit (151) executes independent positioning for calculating the position of a work vehicle (10) on the basis of a satellite signal received from a satellite (40). A transmission processing unit (152) transmits point positioning information to a base station server (20) that selects one base station (30). An acquisition processing unit (153) acquires correction information associated with the one base station from the base station server (20). A second positioning processing unit (154) executes RTK positioning for calculating the current position of the work vehicle (10) on the basis of the correction information. When the RTK positioning for the work vehicle (10) based on first correction information associated with a first base station becomes possible, the transmission processing unit (152) transmits, to the base station server (20), the point positioning information immediately before the RTK positioning becomes possible.

## Description

### TECHNICAL FIELD

The present invention relates to a positioning device or the like that calculates a current position of a moving object.

### BACKGROUND ART

There has been conventionally known a real-time kinematic system (RTK-GPS positioning system; hereinafter, referred to as "RTK system") capable of measuring a position of a work vehicle such as a tractor with high accuracy. The RTK system can perform highly accurate positioning by using correction information corresponding to a base station (reference station) near the work vehicle.

A virtual reference station (VRS) system is also known as another positioning system. For example, Patent Document 1 discloses a technique in which a VRS information broadcasting center generates VRS reference information of antenna stations (Ak: A1 to An) by using satellite observation information from fixed reference stations (R1 to R4) and transmits the generated VRS reference information to a mobile station.

### PRIOR ART DOCUMENT

### PATENT DOCUMENT

Patent Document 1: JP-A-2002-318273

### SUMMARY OF INVENTION

### TECHNICAL PROBLEM

However, the conventional technique selects a base station closest to a work vehicle and calculates a current position of the work vehicle by using correction information corresponding to the base station, and thus, for example, in a case where a field where the work vehicle works exists at an intermediate point between two base stations, the base station corresponding to the correction information may be switched while the work vehicle is autonomously traveling in the field. When the base station is switched while the work vehicle is autonomously traveling, positioning by the RTK system is temporarily stopped to interrupt the autonomous traveling of the work vehicle, which is problematic. This problem is not limited to a work vehicle that autonomously travels in the field and may similarly occur in various systems that measure a position of a moving object by using correction information.

An object of the present invention is to provide a positioning device, a work vehicle, a positioning method, and a positioning program capable of preventing a base station from being switched in a case where a position of a moving object is measured on the basis of correction information corresponding to a specific base station.

### SOLUTION TO PROBLEM

A positioning device according to the present invention includes a first positioning processing unit, a transmission processing unit, an acquisition processing unit, and a second positioning processing unit. The first positioning processing unit performs first positioning for calculating a position of a moving object on the basis of a satellite signal received from a satellite. The transmission processing unit transmits positioning information corresponding to the position of the moving object calculated by the first positioning processing unit to a base station server that selects one base station from among a plurality of base stations on the basis of the position of the moving object calculated by the first positioning processing unit. The acquisition processing unit acquires, from the base station server, correction information generated based on a satellite signal received by the one base station from the satellite. The second positioning processing unit performs second positioning for calculating the position of the moving object on the basis of the correction information acquired by the acquisition processing unit. Further, when the second positioning of the moving object based on first correction information corresponding to a first base station that is the one base station becomes possible, the transmission processing unit transmits, to the base station server, the same positioning information as the positioning information obtained immediately before the second positioning of the moving object based on the first correction information becomes possible.

A work vehicle according to the present invention includes the positioning device and a control device that performs traveling processing on the basis of position information calculated by the positioning device.

A positioning method according to the present invention is a positioning method in which one or a plurality of processors executes: performing first positioning for calculating a position of a moving object on the basis of a satellite signal received from a satellite; transmitting positioning information corresponding to the calculated position of the moving object to a base station server that selects one base station from among a plurality of base stations on the basis of the calculated position of the moving object; acquiring, from the base station server, correction information generated based on a satellite signal received by the one base station from the satellite; and performing second positioning for calculating the position of the moving object on the basis of the correction information. Further, in the positioning method, when the second positioning of the moving object based on first correction information corresponding to a first base station that is the one base station becomes possible, the same positioning information as the positioning information obtained immediately before the second positioning of the moving object based on the first correction information becomes possible is transmitted to the base station server.

A positioning program according to the present invention is a positioning program for causing one or a plurality of processors to execute: performing first positioning for calculating a position of a moving object on the basis of a satellite signal received from a satellite; transmitting positioning information corresponding to the calculated position of the moving object to a base station server that selects one base station from among a plurality of base stations on the basis of the calculated position of the moving object; acquiring, from the base station server, correction information generated based on a satellite signal received by the one base station from the satellite; and performing second positioning for calculating the position of the moving object on the basis of the correction information. Further, in the positioning program, when the second positioning of the moving object based on first correction information corresponding to a first base station that is the one base station becomes possible, the same positioning information as the positioning information obtained immediately before the second positioning of the moving object based on the first correction information becomes possible is transmitted to the base station server.

### ADVANTAGEOUS EFFECTS OF INVENTION

According to the present invention, it is possible to provide a positioning device, a work vehicle, a positioning method, and a positioning program capable of preventing a base station from being switched in a case where a position of a moving object is measured on the basis of correction information corresponding to a specific base station.

### BRIEF DESCRIPTION OF DRAWINGS

Fig. 1 is a schematic diagram illustrating a configuration of a positioning system according to an embodiment of the present invention.
Fig. 2 illustrates a system configuration of the positioning system according to the embodiment of the present invention.
Fig. 3 is an external view illustrating an example of a work vehicle according to the embodiment of the present invention.
Fig. 4 illustrates an example of a traveling route of the work vehicle according to the embodiment of the present invention.
Fig. 5 illustrates an example of positioning information recorded by a positioning device according to the embodiment of the present invention.
Fig. 6 illustrates an example of movement information recorded by the positioning device according to the embodiment of the present invention.
Fig. 7 illustrates an example of base station information registered in a base station server according to the embodiment of the present invention.
Fig. 8 illustrates an example of positioning processing of the work vehicle by the positioning device according to the embodiment of the present invention.
Fig. 9 is a flowchart showing an example of a procedure of positioning processing performed by the positioning device according to the embodiment of the present invention.
Fig. 10 illustrates an example of positioning processing of the work vehicle by the positioning device according to the embodiment of the present invention.
Fig. 11 illustrates an example of positioning processing of the work vehicle by the positioning device according to the embodiment of the present invention.
Fig. 12 is a flowchart showing an example of a procedure of positioning processing performed by the positioning device according to the embodiment of the present invention.
Fig. 13 illustrates an example of positioning processing of a work vehicle by a positioning device according to another embodiment of the present invention.
Fig. 14 illustrates an example of positioning processing of a work vehicle by a positioning device according to another embodiment of the present invention.
Fig. 15 illustrates an example of positioning processing of a work vehicle by a positioning device according to another embodiment of the present invention.

### DESCRIPTION OF EMBODIMENTS

The following embodiments are examples of embodying the present invention and do not limit the technical scope of the present invention.

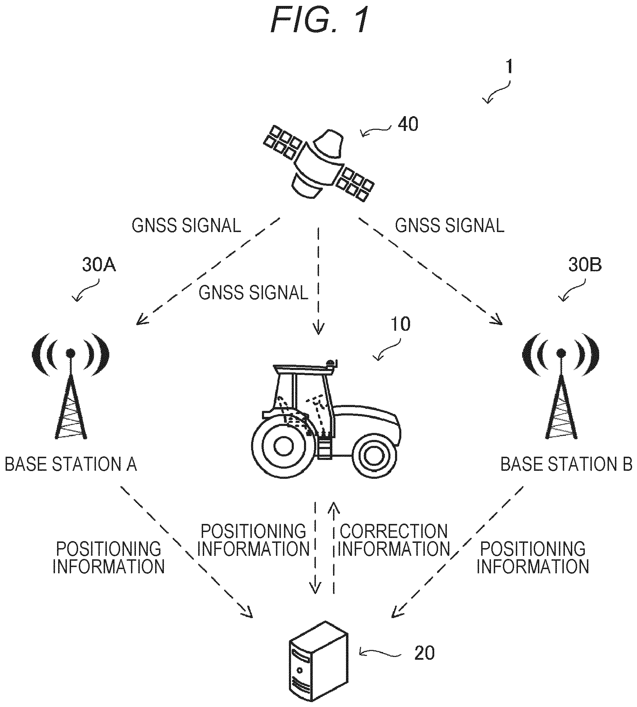

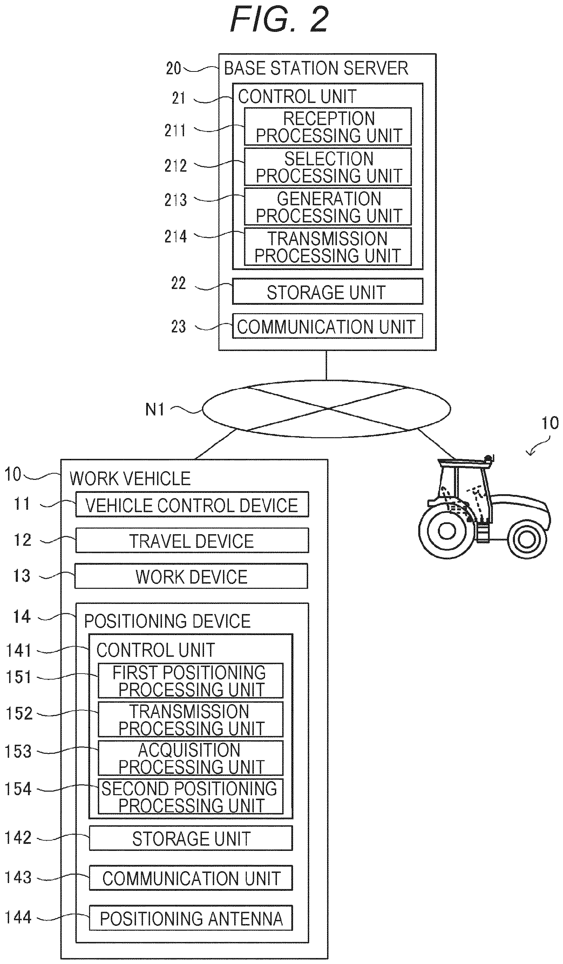

As illustrated in Fig. 1, a positioning system 1 according to an embodiment of the present invention includes a work vehicle 10, a base station server 20, a base station 30, and a satellite 40. The work vehicle 10 and the base station server 20 can communicate with each other via a communication network N1 (see Fig. 2) such as a mobile phone network, a packet network, or a wireless LAN.

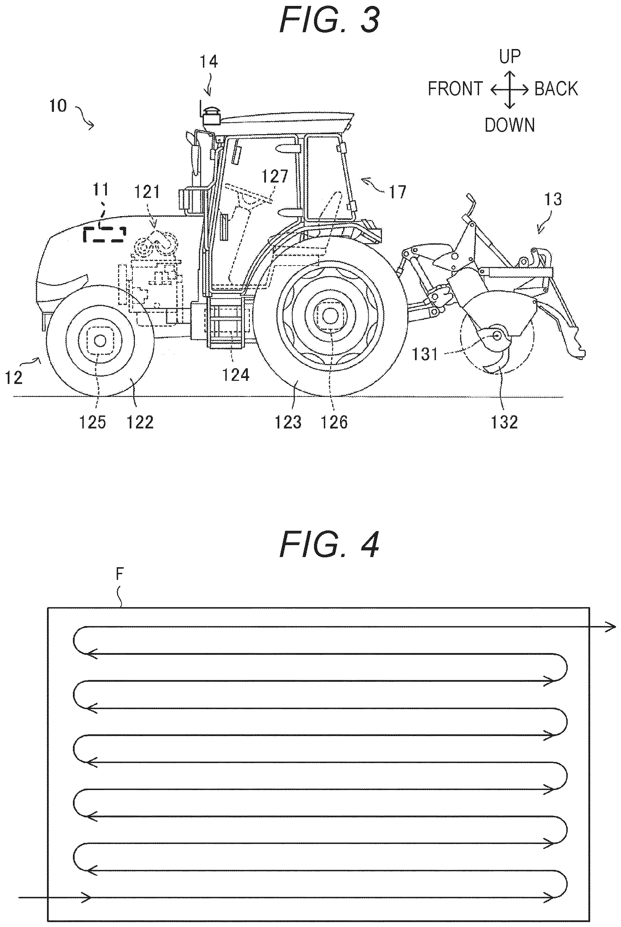

In the present embodiment, an example where the work vehicle 10 is a tractor will be described. As another embodiment, the work vehicle 10 may be a rice transplanter, a combine harvester, a construction machinery, a snowplow, or the like. The work vehicle 10 can autonomously travel (automatically travel) along a traveling route in a field F (see Fig. 4). For example, the work vehicle 10 can autonomously travel along a traveling route generated in advance for the field F on the basis of position information of a current position of the work vehicle 10 calculated by the positioning system 1. The work vehicle 10 is an example of a moving object of the present invention.

The satellite 40 is a positioning satellite included in a satellite positioning system such as a global navigation satellite system (GNSS) and transmits a GNSS signal (satellite signal). The positioning system 1 includes a plurality of satellites 40. The base station 30 is a reference point (reference station) included in the satellite positioning system and is installed at a plurality of points in advance. In the present embodiment, there are two base stations 30A and 30B as an example. The base station server 20 is a management server that manages the plurality of base stations 30 and transmits correction information for calculating the current position of the work vehicle 10 to the work vehicle 10. The base station 30A is an example of a first base station of the present invention, and the base station 30B is an example of a second base station of the present invention.

The work vehicle 10 performs positioning processing of calculating the current position (latitude and longitude) of the work vehicle 10 on the basis of the GNSS signal transmitted from the satellite 40 and the correction information transmitted from the base station server 20. In the present embodiment, the positioning system 1 measures the position of the work vehicle 10 by using a positioning method by the RTK system. The positioning method by the RTK system is well known, and thus detailed description thereof will be omitted, and only an overview thereof will be described below. For example, when receiving a GNSS signal from the satellite 40, the work vehicle 10 calculates the position of the work vehicle 10 (point positioning) on the basis of the GNSS signal. The base station server 20 generates correction information for correcting the position on the basis of positioning information (e.g., GNSS signal) acquired from the base station 30 closest to the work vehicle 10. The positioning system 1 corrects the calculated position of the work vehicle 10 on the basis of the correction information, thereby calculating the current position of the work vehicle 10. The work vehicle 10 autonomously travels along the traveling route while acquiring the current position in the field F.

### [Work vehicle 10]

As illustrated in Figs. 2 and 3, the work vehicle 10 includes a vehicle control device 11, a travel device 12, a work device 13, a positioning device 14, and the like. The vehicle control device 11 is electrically connected to the travel device 12, the work device 13, the positioning device 14, and the like. The vehicle control device 11 and the positioning device 14 may wirelessly communicate with each other.

The vehicle control device 11 is a computer system including one or a plurality of processors and storage memories such as a non-volatile memory and a RAM. The vehicle control device 11 controls operation of the work vehicle 10 in response to various user operations on the work vehicle 10. The vehicle control device 11 performs autonomous traveling processing of the work vehicle 10 on the basis of the current position of the work vehicle 10 calculated by the positioning device 14 described later and the traveling route (see Fig. 4) generated in advance. The vehicle control device 11 is an example of a control device of the present invention, and the autonomous traveling processing is an example of traveling processing of the present invention. The traveling route is stored in the work vehicle 10 or a server (not illustrated) that manages the work vehicle 10.

The travel device 12 is a drive unit that causes the work vehicle 10 to travel. As illustrated in Fig. 3, the travel device 12 includes an engine 121, front wheels 122, rear wheels 123, a transmission 124, a front axle 125, a rear axle 126, a steering wheel 127, and the like. The front wheels 122 and the rear wheels 123 are provided on the left and right of the work vehicle 10. The travel device 12 is not limited to a wheel type including the front wheels 122 and the rear wheels 123 and may be a crawler type including crawlers provided on the left and right of the work vehicle 10.

The engine 121 is a drive source such as a diesel engine or gasoline engine driven by using fuel supplied to a fuel tank (not illustrated). The travel device 12 may include an electric motor as a drive source together with the engine 121 or instead of the engine 121. The engine 121 is connected to a generator (not illustrated), and the generator supplies power to electric components such as the vehicle control device 11 provided in the work vehicle 10, a battery, and the like. The battery is charged with power supplied from the generator. The electric components such as the vehicle control device 11 and the positioning device 14 provided in the work vehicle 10 can be driven by power supplied from the battery even after the engine 121 is stopped.

Driving force of the engine 121 is transmitted to the front wheels 122 via the transmission 124 and the front axle 125 and is transmitted to the rear wheels 123 via the transmission 124 and the rear axle 126. The driving force of the engine 121 is also transmitted to the work device 13 via a PTO shaft (not illustrated). In a case where the work vehicle 10 autonomously travels, the travel device 12 performs a traveling operation in accordance with a command from the vehicle control device 11.

The work device 13 is, for example, a tiller, a plow, a fertilizer machine, a mower, or a seeder machine and is detachable from the work vehicle 10. Therefore, the work vehicle 10 can perform various works by using the respective work devices 13.

Specifically, the work device 13 in Fig. 3 is a tiller including a plurality of tilling claws 132 that rotates about a rotation shaft 131 by driving force from the engine 121 to till the field. The work device 13 is supported by the work vehicle 10 so as to be lifted and lowered by a lifting mechanism (not illustrated). The vehicle control device 11 controls the lifting mechanism to lift and lower the work device 13. For example, the vehicle control device 11 lowers the work device 13 in a case where the work vehicle 10 moves forward in a target working region of the field and raises the work device 13 in a case where the work vehicle 10 moves backward.

The steering wheel 127 is an operation unit operated by a user or the vehicle control device 11. For example, in the travel device 12, an angle of the front wheels 122 is changed by a hydraulic power steering mechanism (not illustrated) or the like in response to an operation on the steering wheel 127 by the vehicle control device 11, thereby changing a traveling direction of the work vehicle 10.

The travel device 12 includes not only the steering wheel 127 but also, for example, a shift lever, an accelerator, and a brake (not illustrated) operated by the vehicle control device 11. In the travel device 12, in response to an operation on the shift lever by the vehicle control device 11, a gear of the transmission 124 is switched to a forward gear, a back gear, or the like, and a speed ratio is operated, thereby controlling a rotational speed of the front wheels 122 and the rear wheels 123. A traveling mode of the work vehicle 10 is switched to, for example, forward movement or backward movement. The vehicle control device 11 operates the accelerator to control a rotational speed of the engine 121. The vehicle control device 11 operates the brake to slow down the rotation of the front wheels 122 and the rear wheels 123 by using an electromagnetic brake.

The positioning device 14 is a communication device including a control unit 141, a storage unit 142, a communication unit 143, a positioning antenna 144, and the like. For example, as illustrated in Fig. 3, the positioning device 14 is provided on an upper part of a cabin 17 on which the user boards. An installation place of the positioning device 14 is not limited to the cabin 17. The control unit 141, the storage unit 142, the communication unit 143, and the positioning antenna 144 of the positioning device 14 may be dispersedly arranged at different positions in the work vehicle 10. As described above, the battery is connected to the positioning device 14, and the positioning device 14 can operate even while the engine 121 is off. As the positioning device 14, for example, a mobile phone terminal, a smartphone, a tablet terminal, or the like may be substituted.

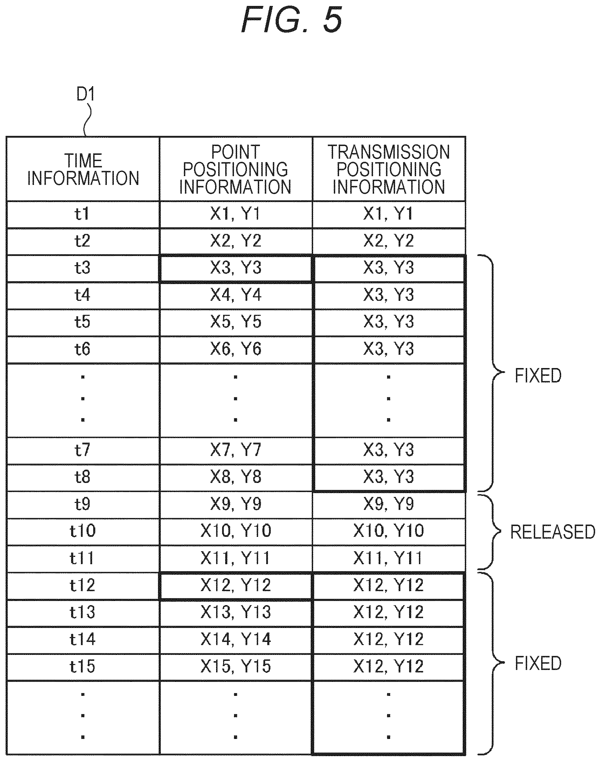

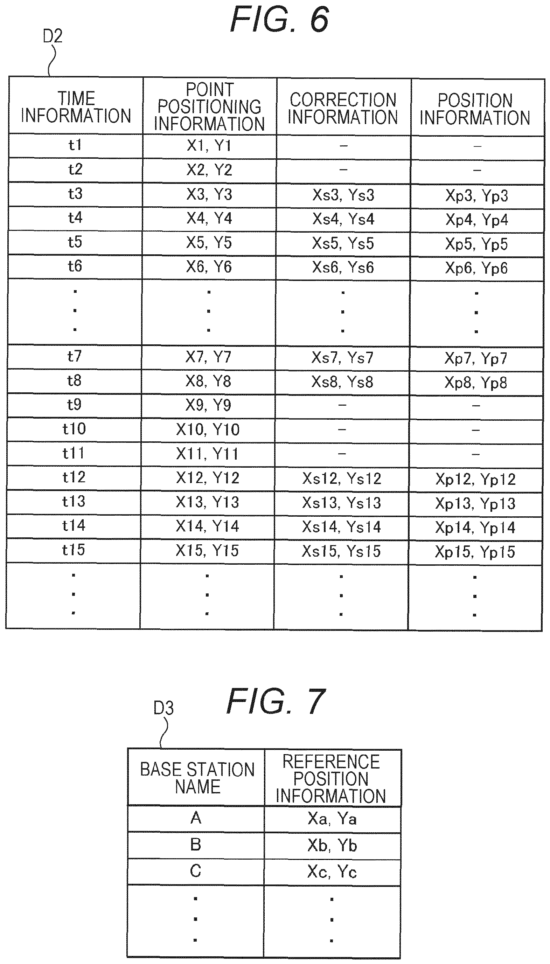

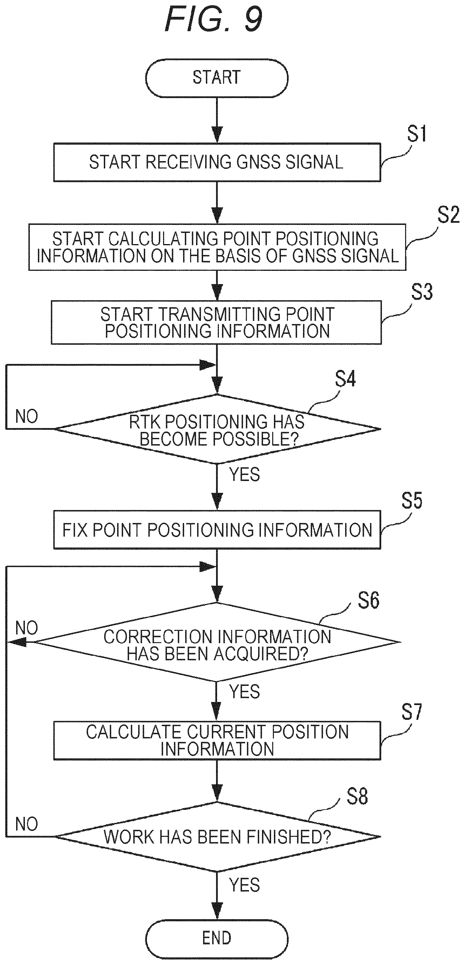

The control unit 141 is a computer system including one or a plurality of processors and storage memories such as a non-volatile memory and a RAM. The storage unit 142 is, for example, a non-volatile memory that stores a positioning program for causing the control unit 141 to perform positioning processing (see Fig. 9) described later, positioning information D1 (see Fig. 5) described later, movement information D2 (see Fig. 6) described later, and the like. For example, the positioning program is non-temporarily recorded in a computer-readable recording medium such as a CD or DVD, is read by a predetermined reading device (not illustrated), and is stored in the storage unit 142. The positioning program may be downloaded from a server (not illustrated) to the positioning device 14 via the communication network N1 and be stored in the storage unit 142.

The communication unit 143 is a communication interface for connecting the positioning device 14 to the communication network N1 in a wired or wireless manner and performing data communication according to a predetermined communication protocol with an external device such as the base station server 20 via the communication network N1.

The positioning antenna 144 receives a radio wave (GNSS signal) transmitted from the satellite 40.

The control unit 141 includes various processing units such as a first positioning processing unit 151, a transmission processing unit 152, an acquisition processing unit 153, and a second positioning processing unit 154. The control unit 141 functions as the various processing units by performing various kinds of processing according to the positioning program. As another embodiment, some or all of the first positioning processing unit 151, the transmission processing unit 152, the acquisition processing unit 153, and the second positioning processing unit 154 may be configured by an electronic circuit.

The first positioning processing unit 151 calculates the position of the work vehicle 10 on the basis of a GNSS signal (an example of a satellite signal of the present invention) received by the positioning antenna 144 from the satellite 40. For example, in a case where the work vehicle 10 autonomously travels in the field F and the positioning antenna 144 receives a radio wave (transmission time, orbit information, and the like) transmitted from each of the plurality of satellites 40, the first positioning processing unit 151 calculates a distance between the positioning antenna 144 and each satellite 40 and calculates the position (latitude and longitude) of the work vehicle 10 on the basis of the calculated distance. In this manner, the first positioning processing unit 151 calculates the position of the work vehicle 10 by so-called point positioning (corresponding to first positioning of the present invention). The first positioning processing unit 151 records positioning information corresponding to the calculated position (hereinafter, referred to as "point positioning information") in the positioning information D 1 of the storage unit 142. The first positioning processing unit 151 is an example of a first positioning processing unit of the present invention.

Fig. 5 illustrates an example of the positioning information D 1. The positioning information D1 includes the point positioning information, transmission positioning information, and the like. The first positioning processing unit 151 calculates the point positioning information on the basis of a GNSS signal received from the satellite 40. In Fig. 5, the point positioning information is indicated by X1 to X15 and Y1 to Y15, but the actual point positioning information includes latitude and longitude indicating the position of the work vehicle 10, instead of X1 to X15 and Y1 to Y15. The positioning information D1 in Fig. 5 indicates time information, but the time information may not be included in the positioning information D1.

The transmission processing unit 152 transmits the positioning information (point positioning information) corresponding to the position of the work vehicle 10 calculated by the first positioning processing unit 151 to the base station server 20.

Specifically, the transmission processing unit 152 transmits the point positioning information to the base station server 20 on a predetermined cycle (e.g., one-second cycle) in a predetermined transmission data format. For example, the transmission processing unit 152 transmits a GGA message (sentence) including the time, latitude, and longitude corresponding to the point positioning information to the base station server 20 on a one-second cycle according to the data transmission standard of the NMEA 0183. The GGA message is an example of positioning information (the point positioning information) of the present invention. The transmission processing unit 152 is an example of a transmission processing unit of the present invention.

The transmission processing unit 152 records the point positioning information to be transmitted to the base station server 20 in the positioning information D1 (see Fig. 5) as the transmission positioning information. In Fig. 5, the transmission positioning information is indicated by X1 to X12 and Y1 to Y12, but the actual transmission positioning information includes latitude and longitude indicating the position of the work vehicle 10, instead of X1 to X12 and Y1 to Y12. In the positioning information D1, the point positioning information and the transmission positioning information are recorded in association with each other.

When receiving the transmission positioning information (the point positioning information) transmitted from the transmission processing unit 152, the base station server 20 selects one base station 30 from among the plurality of base stations 30 on the basis of the position of the work vehicle 10 and generates the correction information on the basis of a GNSS signal received by the selected base station 30 from the satellite 40. The correction information includes positioning information of the position calculated by the base station 30 on the basis of the GNSS signal, reference position information of a position in which the base station 30 is installed, time information, and the like. The base station server 20 transmits the generated correction information to the work vehicle 10. A specific configuration of the base station server 20 will be described later.

The acquisition processing unit 153 acquires the correction information from the base station server 20. The acquisition processing unit 153 acquires the correction information from the base station server 20 in real time while, for example, the work vehicle 10 is autonomously traveling. The acquisition processing unit 153 records the acquired correction information in the movement information D2. The acquisition processing unit 153 is an example of an acquisition processing unit of the present invention.

Fig. 6 illustrates an example of the movement information D2. The movement information D2 includes point positioning information, correction information, position information, and the like. When acquiring the correction information from the base station server 20, the acquisition processing unit 153 records the correction information in the movement information D2 in association with the point positioning information. In Fig. 6, the correction information is indicated by Xs3 to Xs15 and Ys3 to Ys15, but the actual correction information includes latitude and longitude indicating the position (positioning information, reference position information, and the like) of the base station 30, time information, and the like, instead of Xs3 to Xs15 and Ys3 to Ys15. The movement information D2 in Fig. 6 indicates the time information, but the time information may not be included in the movement information D2.

The second positioning processing unit 154 performs RTK positioning (corresponding to second positioning of the present invention) for calculating the position of the work vehicle 10 on the basis of the correction information acquired by the acquisition processing unit 153. For example, the second positioning processing unit 154 corrects the point positioning information of the work vehicle 10 based on the signal received from the satellite 40 on the basis of the correction information corresponding to the positioning information of the selected base station 30, thereby calculating the current position of the work vehicle 10. The second positioning processing unit 154 records the position information indicating the calculated current position of the work vehicle 10 in the movement information D2 (see Fig. 6). The current position of the work vehicle 10 is calculated as described above. The vehicle control device 11 performs the autonomous traveling processing of the work vehicle 10 on the basis of the current position and the traveling route generated in advance while the positioning device 14 calculates the current position of the work vehicle 10. The second positioning processing unit 154 is an example of a second positioning processing unit of the present invention.

### [Base station server 20]

As illustrated in Fig. 2, the base station server 20 includes a control unit 21, a storage unit 22, a communication unit 23, and the like. The base station server 20 is not limited to one computer and may be a computer system in which a plurality of computers operates in cooperation. Various kinds of processing performed in the base station server 20 may be performed by one processor or by a plurality of processors in a distributed manner.

The communication unit 23 is a communication interface for connecting the base station server 20 to the communication network N1 in a wired or wireless manner and performing data communication according to a predetermined communication protocol with an external device such as one or a plurality of work vehicles 10 via the communication network N1.

The storage unit 22 is a non-volatile storage unit such as a hard disk drive (HDD) or a solid state drive (SSD) that stores various kinds of information. The storage unit 22 stores a control program for causing the control unit 21 to perform various kinds of processing. For example, the control program is non-temporarily recorded in a computer-readable recording medium such as a CD or DVD, is read by a reading device (not illustrated) such as a CD drive or DVD drive included in the base station server 20, and is stored in the storage unit 22. The control program may be downloaded from a server (not illustrated) to the base station server 20 via the communication network N1 and be stored in the storage unit 22.

The storage unit 22 includes data such as base station information D3. Fig. 7 illustrates an example of the base station information D3. The base station information D3 includes a base station name, reference position information, and the like. The base station name is a name (identification information) of each of all the base stations 30 included in the positioning system 1. The reference position information is position information (latitude and longitude) indicating an installation position of the base station 30. The base station 30 is installed by a communication carrier, a local government, or the like, and the base station name and the reference position information are registered in the base station information D3 when the base station 30 is installed.

The control unit 21 includes various processing units such as a reception processing unit 211, a selection processing unit 212, a generation processing unit 213, and a transmission processing unit 214. The control unit 21 functions as the various processing units by performing various kinds of processing according to the control program. As another embodiment, some or all of the reception processing unit 211, the selection processing unit 212, the generation processing unit 213, and the transmission processing unit 214 may be configured by an electronic circuit.

The reception processing unit 211 receives, from the positioning device 14, positioning information (point positioning information) corresponding to the position of the work vehicle 10 calculated by the first positioning processing unit 151 of the positioning device 14 mounted on the work vehicle 10. Specifically, the reception processing unit 211 receives the point positioning information (see Fig. 5) transmitted by the transmission processing unit 152 of the positioning device 14 on the predetermined cycle (e.g., one-second cycle).

The selection processing unit 212 selects one base station 30 from among the plurality of base stations 30 on the basis of the position of the work vehicle 10. Specifically, the selection processing unit 212 selects one base station 30 closest to the position of the work vehicle 10 corresponding to the point positioning information received by the reception processing unit 211 from among the plurality of base stations 30 included in the base station information D3 registered in advance.

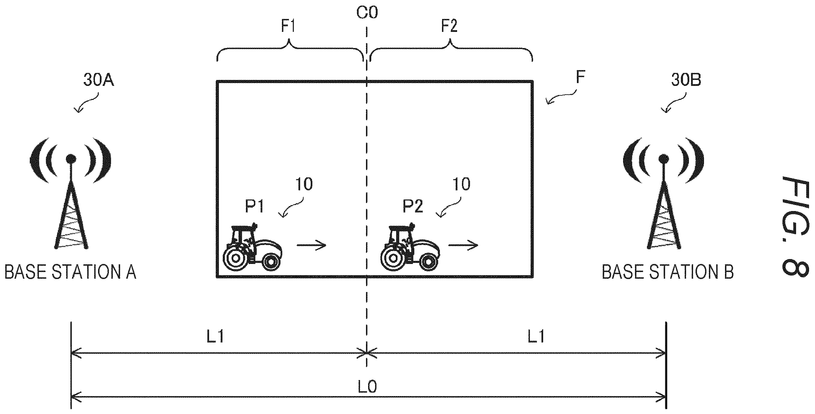

Fig. 8 illustrates the field F and the work vehicle 10 that works in the field F. The field F is located between the two base stations 30A and 30B. In a case where the work vehicle 10 is located at a point P1 at which the work vehicle starts work, the reception processing unit 211 receives the point positioning information corresponding to the point P1 from the positioning device 14. In this case, the selection processing unit 212 selects the base station 30 closest to the point P1 (here, the base station 30A) from among the plurality of base stations 30 included in the base station information D3.

The generation processing unit 213 generates the correction information for correcting the position (point positioning information) of the work vehicle 10 calculated by the first positioning processing unit 151 of the positioning device 14. Specifically, the generation processing unit 213 generates the correction information on the basis of a GNSS signal (satellite signal) received from the satellite 40 by the base station 30 selected by the selection processing unit 212. In the example of Fig. 8, the generation processing unit 213 generates the correction information for the work vehicle 10 on the basis of a GNSS signal received from the satellite 40 by the base station 30A. The correction information includes positioning information of the position calculated by the base station 30A on the basis of the GNSS signal, reference position information of the position in which the base station 30A is installed (see "Xa, Ya" in Fig. 7), and time information.

The transmission processing unit 214 transmits the correction information generated by the generation processing unit 213 to the work vehicle 10. In a case where the work vehicle 10 acquires the correction information transmitted first from the base station server 20, positioning by the RTK system (RTK positioning) is started. That is, when the work vehicle 10 acquires the correction information corresponding to the selected base station 30 transmitted first from the base station server 20, the RTK positioning based on the correction information corresponding to the base station 30 becomes possible. In the present embodiment, a "state in which RTK positioning based on correction information corresponding to one selected base station 30 (the base station 30A in the above example) can be performed" is also referred to as a "state in which communication between the work vehicle 10 and the base station 30 (base station 30A) is established".

As described above, the positioning system 1 measures the position of the work vehicle 10 by the RTK system. The work vehicle 10 performs autonomous traveling by using positioning information by the RTK system.

By the way, for example, in a case where the field F is located at an intermediate point between the two base stations 30, the base station 30 may be switched while the work vehicle 10 is autonomously traveling in the field F. For example, as illustrated in Fig. 8, in a case where an intermediate point C0 is located in the field F between the base station 30A and the base station 30B, the field F includes a first region F1 closer to the base station 30A than the intermediate point C0 and a second region F2 closer to the base station 30B than the intermediate point C0. In this case, the work vehicle 10 autonomously travels in the first region F1 while acquiring the position information calculated by using the correction information corresponding to the base station 30A. However, when the work vehicle 10 enters the second region F2 beyond the intermediate point C0, the base station 30B is closest to the work vehicle 10. Thus, the base station 30 that establishes communication with the work vehicle 10 is switched. Therefore, the correction information is switched in the work vehicle 10, and positioning calculation by the RTK system is temporarily stopped to interrupt the autonomous traveling of the work vehicle 10. In the example of Fig. 8, in each case where: the work vehicle 10 is located in the first region F 1; and the work vehicle is located in the second region F2, it is possible to perform RTK positioning on the work vehicle 10 by using the correction information corresponding to the base station 30A, and it is also possible to perform RTK positioning on the work vehicle 10 by using the correction information corresponding to the base station 30B. That is, it is possible to perform RTK positioning in the field F by using pieces of the correction information corresponding to the plurality of base stations 30.

Meanwhile, as described below, in a case where the position of the work vehicle 10 is measured based on correction information corresponding to a specific base station 30, the positioning device 14 according to the present embodiment can prevent the base station 30 from being switched.

Here, the example of Fig. 8 will be described. In a case where the work vehicle 10 is located at the point P1 in the first region F1, the base station server 20 selects the base station 30A (base station closest to the point P1) on the basis of the point positioning information corresponding to the point P1 received from the work vehicle 10, generates correction information corresponding to the selected base station 30A, and transmits the correction information to the work vehicle 10. When the acquisition processing unit 153 of the positioning device 14 acquires the first correction information from the base station server 20, RTK positioning corresponding to the base station 30A becomes possible. That is, communication between the work vehicle 10 and the base station 30A is established.

When the RTK positioning of the work vehicle 10 based on the correction information corresponding to the base station 30A (corresponding to the second positioning of the present invention) becomes possible, the transmission processing unit 152 of the positioning device 14 transmits, to the base station server 20, the same positioning information as the point positioning information obtained immediately before the RTK positioning of the work vehicle 10 based on the correction information corresponding to the base station 30A becomes possible. The point positioning information includes at least latitude information, longitude information, and time information. For example, when the RTK positioning of the work vehicle 10 becomes possible, the transmission processing unit 152 transmits, to the base station server 20, the same latitude information and longitude information as the longitude information and the latitude information obtained immediately before the RTK positioning of the work vehicle 10 becomes possible.

For example, the positioning device 14 is assumed to transmit point positioning information "X3, Y3" (see Fig. 5) to the base station server 20, and the base station server 20 is assumed to select the base station 30A on the basis of the point positioning information "X3, Y3 ", generate correction information on the basis of a GNSS signal received by the selected base station 30A from the satellite 40, and transmit the first correction information to the work vehicle 10. When acquiring the first correction information from the base station server 20, the positioning device 14 can perform the RTK positioning of the work vehicle 10 on the basis of the correction information corresponding to the base station 30A. In this case, as illustrated in Fig. 5, the transmission processing unit 152 of the positioning device 14 transmits, to the base station server 20, the same positioning information "X3, Y3" as the point positioning information "X3, Y3" transmitted immediately before the RTK positioning of the work vehicle 10 based on the correction information corresponding to the base station 30A becomes possible. That is, the transmission positioning information transmitted from the positioning device 14 to the base station server 20 is fixed to the point positioning information "X3, Y3" obtained immediately before the RTK positioning of the work vehicle 10 based on the correction information corresponding to the base station 30A becomes possible (see Fig. 5).

Therefore, regardless of the position of the work vehicle 10, the transmission processing unit 152 continues to transmit the same point positioning information "X3, Y3" to the base station server 20 while the RTK positioning of the work vehicle 10 can be performed based on the correction information corresponding to the base station 30A. For example, in the example of Fig. 8, in a case where the RTK positioning of the work vehicle 10 based on the correction information corresponding to the base station 30A can be performed at all positions in the field F, the transmission processing unit 152 continues to transmit the point positioning information "X3, Y3" corresponding to the position in the first region F1 to the base station server 20 even when the work vehicle 10 moves from the first region F1 to a point P2 in the second region F2. Therefore, the base station server 20 continues to select the base station 30A and does not select the base station 30B because the base station server receives the same point positioning information "X3, Y3" (transmission positioning information), regardless of the actual position of the work vehicle 10. Then, the base station server 20 continues to transmit the correction information corresponding to the base station 30A to the work vehicle 10. Therefore, the positioning device 14 continues to receive the correction information corresponding to the base station 30A without interruption and continues to calculate the current position of the work vehicle 10 while the work vehicle 10 is traveling at least in the field F. This makes it possible to prevent the autonomous traveling of the work vehicle 10 from being interrupted in the field F.

As described above, when the RTK positioning of the work vehicle 10 based on the correction information corresponding to the base station 30A becomes possible, the acquisition processing unit 153 of the positioning device 14 acquires, from the base station server 20, the correction information generated based on a GNSS signal received by the base station 30A from the satellite 40, and the second positioning processing unit 154 measures the position of the work vehicle 10 on the basis of the correction information corresponding to the base station 30A acquired by the acquisition processing unit 153. Specifically, when the RTK positioning of the work vehicle 10 based on the correction information corresponding to the base station 30A becomes possible, the acquisition processing unit 153 acquires the correction information corresponding to the base station 30A from the base station server 20, and the second positioning processing unit 154 calculates the position of the work vehicle 10 on the basis of the correction information corresponding to the base station 30A acquired by the acquisition processing unit 153 in each case where: the work vehicle 10 is located in a place (the first region F1 in Fig. 8) closer to the base station 30A than to the base station 30B; and the work vehicle 10 is located in a place (the second region F2 in Fig. 8) closer to the base station 30B than to the base station 30A. In other words, when the RTK positioning of the work vehicle 10 based on the correction information corresponding to the base station 30A becomes possible, the second positioning processing unit 154 measures the position of the work vehicle 10 on the basis of the correction information corresponding to the base station 30Ain each case where: the work vehicle 10 travels in the first region F1; and the work vehicle 10 travels in the second region F2.

When the RTK positioning of the work vehicle 10 based on the correction information corresponding to the base station 30Abecomes possible, the acquisition processing unit 153 acquires the correction information corresponding to the base station 30A from the base station server 20, and the second positioning processing unit 154 measures the position of the work vehicle 10 on the basis of the correction information corresponding to the base station 30A acquired by the acquisition processing unit 153 even in a case where the work vehicle 10 moves from the place (the first region F1 in Fig. 8) closer to the base station 30A to the place (the second region F2 in Fig. 8) closer to the base station 30B. In this manner, the positioning device 14 calculates the current position of the work vehicle 10.

### [Positioning processing]

Hereinafter, an example of the positioning processing performed by the control unit 141 of the positioning device 14 will be described with reference to Fig. 9. For example, the positioning processing is started by the control unit 141 when the control unit 141 receives a satellite signal (GNSS signal) from the satellite 40. The positioning processing may also be started in response to a predetermined user operation on the work vehicle 10 on which the positioning device 14 is mounted.

The invention of the present application may be regarded as an invention of a positioning method for performing a part or all of the positioning processing by the control unit 141 or an invention of a positioning program for causing the control unit 141 to perform a part or all of the positioning method. The positioning processing may be performed by one or a plurality of processors. For example, the positioning processing may be cooperatively performed by the control unit 141 of the positioning device 14 and the control unit 21 of the base station server 20.

In step S1, the control unit 141 starts reception processing of receiving a GNSS signal from the satellite 40. For example, the control unit 141 receives a radio wave (GNSS signal) including transmission time, orbit information, and the like from each of the plurality of (four) satellites 40.

In step S2, the control unit 141 (first positioning processing unit 151) starts point positioning for calculating the position of the work vehicle 10 on the basis of the GNSS signal received from the satellite 40. The control unit 141 records positioning information (point positioning information) corresponding to the calculated position in the positioning information D1 (see Fig. 5) of the storage unit 142.

In step S3, the control unit 141 (transmission processing unit 152) starts transmission processing of transmitting the point positioning information corresponding to the position of the work vehicle 10 calculated in step S2 to the base station server 20. For example, the control unit 141 transmits a GGA message including the time, latitude, and longitude corresponding to the point positioning information to the base station server 20 on a one-second cycle according to the data transmission standard of the NMEA 0183. The control unit 141 records the point positioning information to be transmitted to the base station server 20 in the positioning information D1 (see Fig. 5) as the transmission positioning information.

The base station server 20 selects the base station 30 closest to the work vehicle 10 on the basis of the point positioning information transmitted from the positioning device 14, generates correction information corresponding to the selected base station 30, and transmits the correction information to the work vehicle 10.

In step S4, the control unit 141 determines whether or not RTK positioning has become possible. For example, when acquiring the first correction information from the base station server 20 (S4: Yes), the control unit 141 determines that the RTK positioning has become possible, and the processing proceeds to step S5. The control unit 141 waits until acquiring the first correction information from the base station server 20 (S4: No). For example, in the example of Fig. 8, when acquiring the first correction information corresponding to the base station 30A from the base station server 20, the control unit 141 determines that the RTK positioning based on the correction information corresponding to the base station 30A has become possible.

In step S5, the control unit 141 (transmission processing unit 152) fixes the point positioning information (transmission positioning information) to be transmitted to the base station server 20 to the point positioning information (see "X3, Y3" in Fig. 5) obtained immediately before the RTK positioning of the work vehicle 10 based on the correction information corresponding to the base station 30A becomes possible. That is, in the above example, the control unit 141 transmits the point positioning information "X3, Y3" (GGA message) to the base station server 20 on a one-second cycle. Further, the control unit 141 transmits only latitude information and longitude information ("X3, Y3 ") of the point positioning information to the base station server 20 on a one-second cycle. Note that time information included in the GGA message is updated.

In step S6, the control unit 141 (acquisition processing unit 153) determines whether or not the correction information has been acquired from the base station server 20. Here, the control unit 141 determines whether or not the correction information corresponding to the base station 30A has been acquired. When the control unit 141 acquires the correction information (S6: Yes), the processing proceeds to step S7. The control unit 141 waits until acquiring the first correction information from the base station server 20 (S6: No).

After the point positioning information is fixed, the control unit 141 continues to transmit the same point positioning information ("X3, Y3 ") to the base station server 20. The base station server 20 continues to select the base station 30A on the basis of the point positioning information ("X3, Y3") transmitted from the positioning device 14, generate correction information corresponding to the selected base station 30A, and transmit the correction information to the work vehicle 10. Therefore, the control unit 141 continues to acquire the correction information corresponding to the same base station 30A, regardless of the position of the work vehicle 10.

In step S7, the control unit 141 (second positioning processing unit 154) corrects the position corresponding to the point positioning information of the work vehicle 10 calculated in step S2 on the basis of the correction information acquired in step S6 and calculates a current position of the work vehicle 10. Here, the control unit 141 corrects the position corresponding to the point positioning information on the basis of the correction information corresponding to the base station 30A and calculates the current position of the work vehicle 10. As illustrated in Fig. 8, the control unit 141 calculates the current position of the work vehicle 10 by using the correction information corresponding to the base station 30A, regardless of whether the work vehicle 10 is located in the first region F1 or in the second region F2.

In step S8, the control unit 141 determines whether or not work by the work vehicle 10 has been finished. For example, when the work vehicle 10 completes the work in the whole region of the field F, that is, when the work vehicle completes autonomous traveling along the set traveling route, the control unit 141 determines that the work by the work vehicle 10 has been finished (S8: Yes). When the work is completed, the control unit 141 ends the positioning processing. Meanwhile, when the control unit 141 determines that the work by the work vehicle 10 has not been finished (S8: No), the processing proceeds to step S6. When the processing proceeds to step S6, the control unit 141 continues the processing of acquiring the correction information from the base station server 20 and calculating the current position of the work vehicle 10. As described above, the control unit 141 performs the positioning processing.

By the way, when a distance L10 between the work vehicle 10 and the base station 30 is equal to or more than a predetermined distance, a communication environment with the base station 30 deteriorates, and the positioning device 14 cannot perform positioning (RTK positioning) on a moving object of which the position is to be measured (the work vehicle 10 in the present embodiment). For example, when the work vehicle 10 (positioning device 14) is away from the base station 30A by 5 km or more, the positioning device 14 cannot perform RTK positioning on the work vehicle 10 on the basis of the correction information corresponding to the base station 30A.

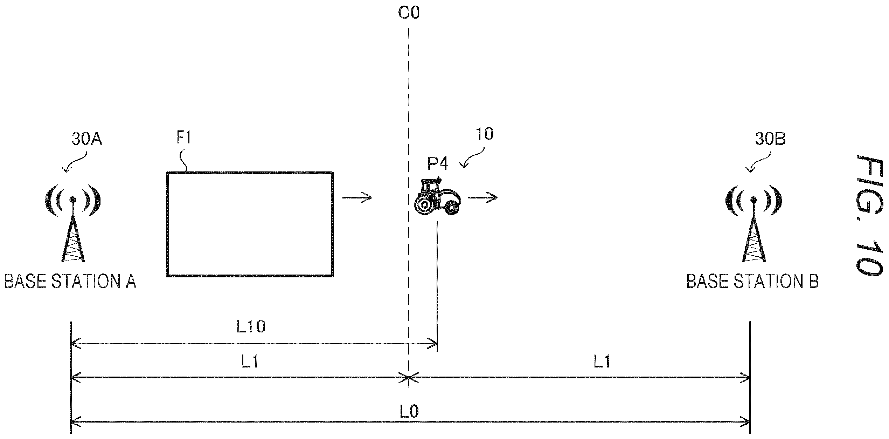

Here, in the example of Fig. 8, for example, in a case where the distance L10 between the work vehicle 10 and the base station 30A is less than the predetermined distance, regardless of the position of the work vehicle 10 in the field F, the positioning device 14 can perform the RTK positioning on the basis of the correction information corresponding to the base station 30A. However, for example, as illustrated in Fig. 10, when the distance L10 between the work vehicle 10 and the base station 30Abecomes equal to or more than the predetermined distance because the work vehicle 10 moves to a point P4 outside the field F, the positioning device 14 cannot perform the RTK positioning on the work vehicle 10 on the basis of the correction information corresponding to the base station 30A. The predetermined distance at which the positioning device 14 can perform the RTK positioning on the basis of the correction information corresponding to the base station 30A changes depending on the communication environment between the positioning device 14 and the base station 30. Therefore, for example, in a case where the positioning device 14 can perform the RTK positioning on the basis of the correction information corresponding to the base station 30A, when the work vehicle 10 moves too far from the base station 30A, the positioning device 14 cannot perform the RTK positioning at that time.

Therefore, when the RTK positioning of the work vehicle 10 based on the correction information corresponding to the base station 30A becomes impossible, the transmission processing unit 152 releases the fixation of the point positioning information and transmits, to the base station server 20, point positioning information corresponding to the position of the work vehicle 10 calculated by the first positioning processing unit 151 after the RTK positioning of the work vehicle 10 based on the correction information corresponding to the base station 30A becomes impossible.

For example, in Fig. 5, a time t9 indicates a time at which the RTK positioning of the work vehicle 10 based on the correction information corresponding to the base station 30A becomes impossible due to the movement of the work vehicle 10. When the RTK positioning of the work vehicle 10 based on the correction information corresponding to the base station 30A becomes impossible, the transmission processing unit 152 releases the fixation of the point positioning information "X3, Y3" and transmits, to the base station server 20, point positioning information "X9, Y9" corresponding to the position of the work vehicle 10 calculated by the first positioning processing unit 151 after the release. Thereafter, the transmission processing unit 152 sequentially transmits, to the base station server 20, new point positioning information calculated by the first positioning processing unit 151 according to the position of the work vehicle 10.

When the fixation of the point positioning information "X3, Y3" is released, for example, when the work vehicle 10 moves to the base station 30B side beyond the intermediate point C0, the base station server 20 selects the base station 30B in order to acquire the point positioning information on the base station 30B side. Then, the base station server 20 generates correction information on the basis of a GNSS signal received by the base station 30B from the satellite 40 and transmits the correction information to the positioning device 14. In the positioning device 14, the acquisition processing unit 153 acquires the correction information corresponding to the base station 30B from the base station server 20, and the second positioning processing unit 154 measures the position corresponding to the point positioning information of the work vehicle 10 calculated by the first positioning processing unit 151 on the basis of the correction information corresponding to the base station 30B acquired by the acquisition processing unit 153 and calculates the current position of the work vehicle 10.

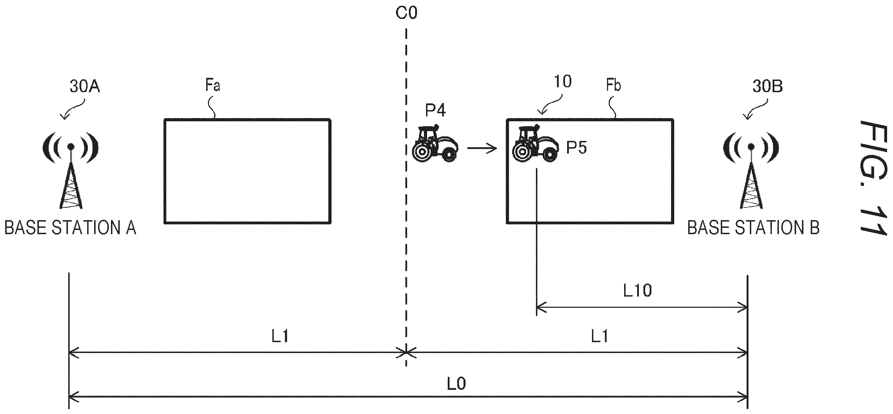

The above configuration in which the base station 30 that establishes communication with the work vehicle 10 is switched to calculate the current position of the work vehicle 10 is effective in a case where, for example, the work vehicle 10 finishes work in a field Fa, then moves to a field Fb, and works in the field Fb as illustrated in Fig. 11. In the example of Fig. 11, the work vehicle 10 starts work at a point P5 in the field Fb. At the point P5, the distance L10 between the work vehicle 10 and the base station 30B is less than the predetermined distance.

In a case where the work vehicle 10 is located at the point P5 where the work vehicle starts work, the transmission processing unit 152 transmits point positioning information "X12, Y12" (see Fig. 5) corresponding to the position of the work vehicle 10 calculated by the first positioning processing unit 151 to the base station server 20. The reception processing unit 211 of the base station server 20 receives the point positioning information "X12, Y12" corresponding to the point P5 from the positioning device 14. In this case, the selection processing unit 212 selects the base station 30B closest to the point P5 from among the plurality of base stations 30 included in the base station information D3. The generation processing unit 213 generates the correction information for the work vehicle 10 on the basis of a GNSS signal received by the base station 30B from the satellite 40, and the transmission processing unit 214 transmits the generated correction information corresponding to the base station 30B to the work vehicle 10. When the work vehicle 10 acquires the correction information corresponding to the selected base station 30B transmitted first from the base station server 20, RTK positioning based on the correction information corresponding to the base station 30B becomes possible.

As illustrated in Fig. 5, the transmission processing unit 152 of the positioning device 14 transmits, to the base station server 20, the same positioning information "X12, Y12" as the point positioning information "X12, Y12" transmitted immediately before the RTK positioning of the work vehicle 10 based on the correction information corresponding to the base station 30B becomes possible. That is, the transmission positioning information transmitted from the positioning device 14 to the base station server 20 is fixed to the point positioning information "X12, Y12" obtained immediately before the RTK positioning of the work vehicle 10 based on the correction information corresponding to the base station 30B becomes possible (see Fig. 5).

Therefore, regardless of the position of the work vehicle 10, the transmission processing unit 152 continues to transmit the same point positioning information "X12, Y12" to the base station server 20 while the RTK positioning of the work vehicle 10 can be performed based on the correction information corresponding to the base station 30B. In a case where the RTK positioning of the work vehicle 10 based on the correction information corresponding to the base station 30B can be performed at all positions in the field Fb, the transmission processing unit 152 continues to transmit the same point positioning information "X12, Y12" to the base station server 20. Therefore, the base station server 20 continues to select the base station 30B and does not select another base station 30 because the base station server receives the same point positioning information "X12, Y12" (transmission positioning information), regardless of the actual position of the work vehicle 10. Then, the base station server 20 continues to transmit the correction information corresponding to the base station 30B to the work vehicle 10. Therefore, the positioning device 14 continues to receive the correction information corresponding to the base station 30B without interruption and continues to calculate the current position of the work vehicle 10 while the work vehicle 10 is traveling at least in the field Fb. This makes it possible to prevent the autonomous traveling of the work vehicle 10 from being interrupted in the field Fb.

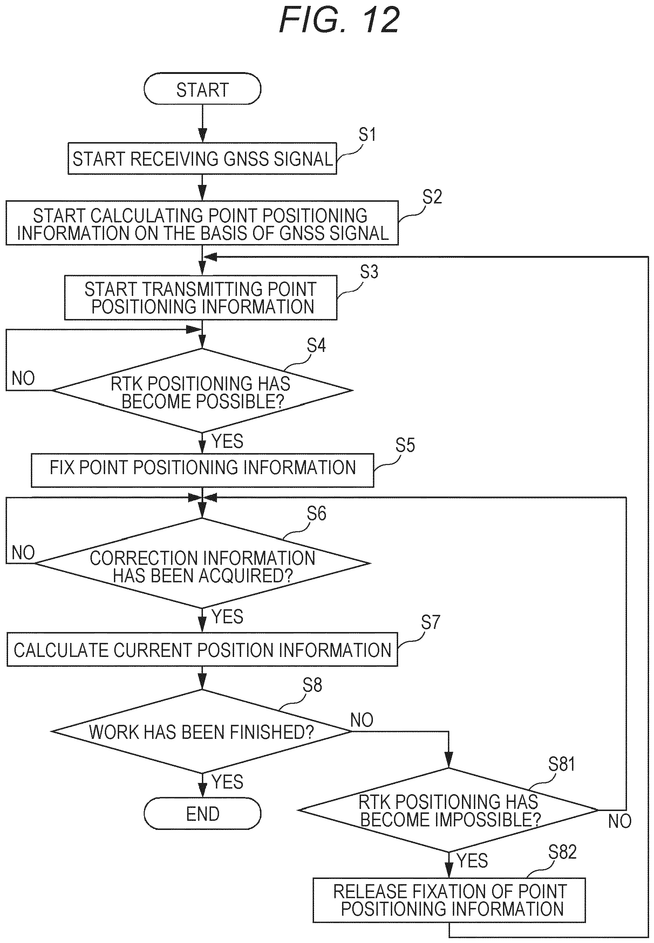

An example of the positioning processing corresponding to the examples of Figs. 10 and 11 will be described with reference to Fig. 12. In the positioning processing of Fig. 12, the same processing as the positioning processing of Fig. 9 will be denoted by the same step numbers, and description thereof will be omitted. In the positioning processing of Fig. 12, processing in steps S81 and S82 are added to the positioning processing of Fig. 9.

In step S8, when the control unit 141 determines that work by the work vehicle 10 has not been finished (S8: No), the processing proceeds to step S81.

In step S81, the control unit 141 determines whether or not the RTK positioning of the work vehicle 10 based on the correction information corresponding to the base station 30Athat has established communication with the work vehicle 10 has become impossible. When the control unit 141 determines that the RTK positioning corresponding to the base station 30A has become impossible (S81: Yes), the processing proceeds to step S82. Meanwhile, when the control unit 141 determines that the RTK positioning corresponding to the base station 30Ais possible (S81: No), the processing proceeds to step S6.

In step S82, the control unit 141 releases the fixation of the point positioning information. For example, as illustrated in Fig. 10, in a case where, because the work vehicle 10 has moved from a point P3 to the point P4, the work vehicle 10 cannot acquire the correction information from the base station 30A and the RTK positioning becomes impossible, the control unit 141 releases the fixation of the point positioning information "X3, Y3" (see Fig. 5). After releasing the fixation of the point positioning information "X3, Y3", then in step S3, the control unit 141 starts transmitting the point positioning information according to the position of the work vehicle 10.

Thereafter, in step S4, the control unit 141 determines whether or not the RTK positioning of the work vehicle 10 has become possible. Here, for example, in the examples of Figs. 10 and 11, when the control unit 141 acquires the first correction information corresponding to the base station 30B from the base station server 20, the control unit 141 determines that the RTK positioning based on the correction information corresponding to the base station 30B has become possible (S4: Yes).

In step S5, the control unit 141 fixes the point positioning information (transmission positioning information) to be transmitted to the base station server 20 to the point positioning information (see "X12, Y12" in Fig. 5) obtained immediately before the RTK positioning of the work vehicle 10 based on the correction information corresponding to the base station 30B becomes possible. Then, the control unit 141 acquires the correction information corresponding to the base station 30B (step S6), corrects the position corresponding to the point positioning information of the work vehicle 10 calculated in step S2 on the basis of the correction information acquired in step S6, and calculates the current position of the work vehicle 10 (step S7).

As described above, the positioning device 14 calculates (point positioning) the position (point positioning information) of the moving object (work vehicle 10) on the basis of a satellite signal (GNSS signal) received from the satellite 40 and transmits the calculated point positioning information to the base station server 20. The base station server 20 selects one base station 30 from among the plurality of base stations 30 on the basis of the point positioning information, generates correction information corresponding to the selected base station 30, and transmits the correction information to the positioning device 14. When acquiring the correction information from the base station server 20, the positioning device 14 measures the position of the work vehicle 10 on the basis of the correction information. In a case where RTK positioning of the moving object based on the correction information corresponding to the selected base station 30 becomes possible, the positioning device 14 transmits, to the base station server 20, the same positioning information as the point positioning information transmitted immediately before the RTK positioning of the moving object based on the correction information becomes possible. In this manner, the positioning device 14 fixes the position information of the point positioning information so that the base station 30 is not switched in the base station server 20. Therefore, for example, in a case where the field F is located at an intermediate point between two base stations (see Fig. 8), it is possible to prevent the base station 30 corresponding to the correction information from being switched while the work vehicle 10 is autonomously traveling in the field F. Therefore, for example, it is possible to prevent reception of the correction information from the base station server 20 from being stopped to interrupt the autonomous traveling of the work vehicle 10.

### [Other embodiments]

Hereinafter, other embodiments of the positioning system 1 according to the present embodiment will be described.

As another embodiment, the positioning device 14 may set in advance a range in which RTK positioning can be performed (hereinafter, referred to as a "positionable range AR"). For example, the positioning device 14 sets a range having a radius R (e.g., 5 km) around the work vehicle 10 (positioning device 14) as the positionable range AR.

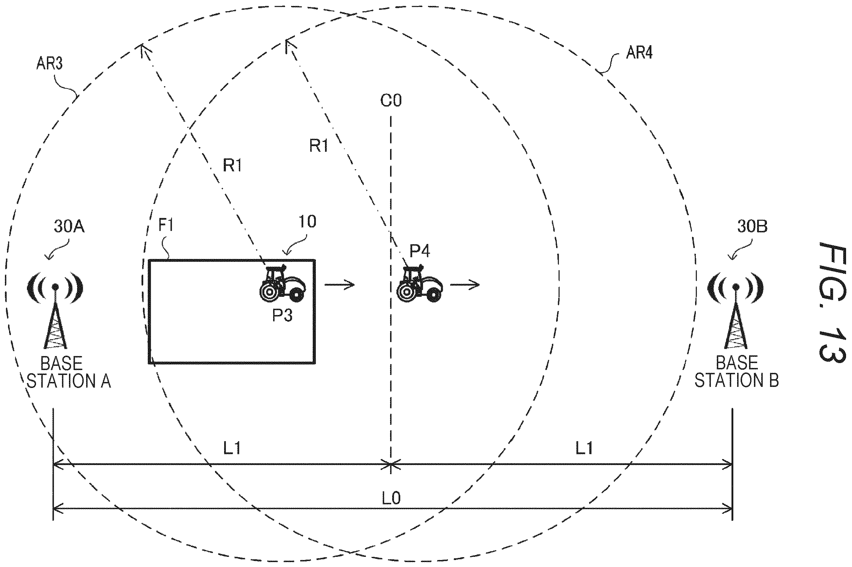

In an example of Fig. 13, for example, the RTK positioning can be performed as long as the base station 30A is included in the positionable range AR, regardless of the position of the work vehicle 10 in the field F. However, for example, in a case where the work vehicle 10 is located at the point P4 outside the field F, the base station 30A is out of the positionable range AR. In Fig. 13, "AR4" indicates a positionable range AR corresponding to the point P4, and "AR3" indicates a positionable range AR corresponding to the point P3. In this case, the positioning device 14 cannot perform the RTK positioning of the work vehicle 10 on the basis of the correction information corresponding to the base station 30A.

The control unit 141 determines whether or not the base station 30A falls within the positionable range AR on the basis of the positioning information of the base station 30A included in the correction information, and, in a case where the base station 30A does not fall within the positionable range AR, the control unit determines that the RTK positioning of the work vehicle 10 based on the correction information corresponding to the base station 30A has become impossible. That is, when the base station 30A is located within a predetermined range (positionable range AR) from the work vehicle 10, the RTK positioning of the work vehicle 10 based on the correction information corresponding to the base station 30A becomes possible. Meanwhile, when the base station 30A is located outside the predetermined range from the work vehicle 10, the RTK positioning of the work vehicle 10 based on the correction information corresponding to the base station 30A becomes impossible.

When the RTK positioning of the work vehicle 10 based on the correction information corresponding to the base station 30A becomes impossible, the transmission processing unit 152 releases fixation of the point positioning information and transmits, to the base station server 20, point positioning information corresponding to the position of the work vehicle 10 calculated by the first positioning processing unit 151 after the RTK positioning of the work vehicle 10 based on the correction information corresponding to the base station 30A becomes impossible.

Thereafter, for example, when the work vehicle 10 moves to the base station 30B side beyond the intermediate point C0, the base station server 20 selects the base station 30B in order to acquire the point positioning information on the base station 30B side. Then, the base station server 20 generates correction information on the basis of a GNSS signal received by the base station 30B from the satellite 40 and transmits the correction information to the positioning device 14. In the positioning device 14, the acquisition processing unit 153 acquires the correction information corresponding to the base station 30B from the base station server 20, and the second positioning processing unit 154 measures the position corresponding to the point positioning information of the work vehicle 10 calculated by the first positioning processing unit 151 on the basis of the correction information corresponding to the base station 30B acquired by the acquisition processing unit 153 and calculates the current position of the work vehicle 10.

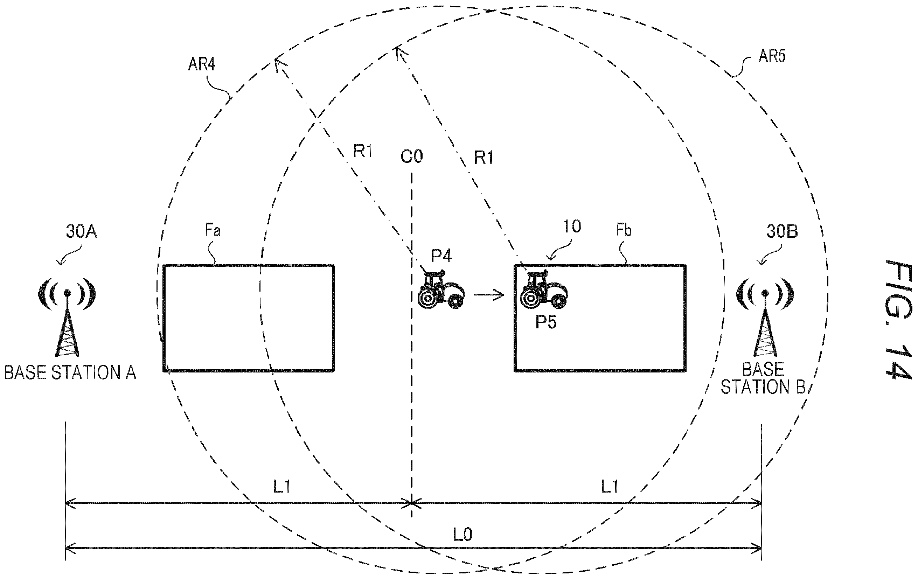

Here, as illustrated in Fig. 14, in a case where the field Fb exists on the base station 30B side, and the work vehicle 10 moves to the field Fb and works in the field Fb after finishing work in the field Fa, the positioning device 14 performs processing similar to that in the above embodiment, thereby calculating the current position of the work vehicle 10.

As still another embodiment, the positioning device 14 may measure the distance between the work vehicle 10 and the base station 30 and switch the base station 30 to be subjected to the RTK positioning to the base station 30 closer to the work vehicle 10. For example, as illustrated in Fig. 11, in a case where the work vehicle 10 is located in the field Fb, the positioning device 14 switches the base station 30 to be subjected to the RTK positioning from the base station 30Ato the base station 30B at a time when the work vehicle 10 moves to the base station 30B side beyond the intermediate point C0.

Specifically, in a case where the base station 30 closest to the work vehicle 10 changes from the base station 30A to the base station 30B, the transmission processing unit 152 releases the fixation of the point positioning information and transmits, to the base station server 20, point positioning information corresponding to the position of the work vehicle 10 calculated by the first positioning processing unit 151. Therefore, the base station server 20 selects the base station 30B in order to acquire the point positioning information on the base station 30B side. Then, the base station server 20 generates correction information on the basis of a GNSS signal received by the base station 30B from the satellite 40 and transmits the correction information to the positioning device 14. In the positioning device 14, the acquisition processing unit 153 acquires the correction information corresponding to the base station 30B from the base station server 20, and the second positioning processing unit 154 measures the position corresponding to the point positioning information of the work vehicle 10 calculated by the first positioning processing unit 151 on the basis of the correction information corresponding to the base station 30B acquired by the acquisition processing unit 153 and calculates the current position of the work vehicle 10.

As described above, the positioning device 14 may monitor the distance between the work vehicle 10 and the base station 30 and switch the base station 30 to be subjected to the RTK positioning to the base station 30 closest to the work vehicle 10 by itself.

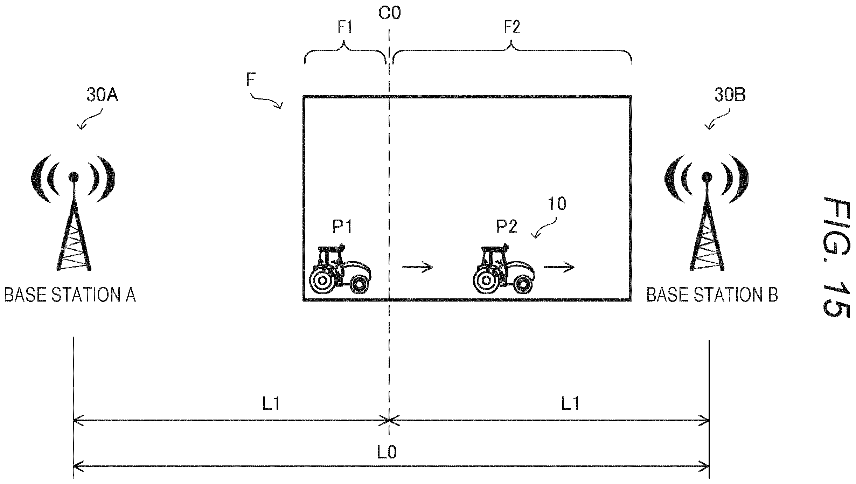

For example, as illustrated in Fig. 15, there is a case where the field F located between the two base stations 30A and 30B is located closer to one base station (here, the base station 30B). That is, the field F includes two divided regions divided at the intermediate point between the base station 30A and the base station 30B, and one of the divided regions has a larger area than the other divided region. Here, the field F is divided into the first region F1 on the base station 30A side and the second region F2 on the base station 30B side, and the second region F2 has a larger area than the first region F1. In order to measure the position of the work vehicle 10 traveling in such the field F, it is desirable to measure the position of the work vehicle 10 by using correction information corresponding to the base station 30B in the second region F2 having a larger area from the viewpoint of positioning accuracy.

However, for example, in a case where the base station server 20 selects the base station 30A at a timing when the work vehicle 10 is located at the point P1, generates correction information corresponding to the base station 30A, and transmits the correction information to the positioning device 14, the positioning device 14 calculates the current position of the work vehicle 10 by using the correction information corresponding to the base station 30A, regardless of the position of the work vehicle 10 in the field F. Therefore, for example, in a case where the work vehicle 10 is located in the second region F2, the distance between the work vehicle 10 and the base station 30A increases, which may reduce the positioning accuracy of the work vehicle 10.

In view of this, as still another embodiment, the transmission processing unit 152 transmits point positioning information corresponding to the second region F2 having a larger area (an example of the first divided region of the present invention) to the base station server 20. The acquisition processing unit 153 acquires correction information generated based on a GNSS signal received from the satellite 40 by the base station 30B closer to the second region F2 having a larger area. Then, the second positioning processing unit 154 calculates (measures) the position of the work vehicle 10 on the basis of the correction information acquired by the acquisition processing unit 153.

Specifically, in a case where the work vehicle 10 is initially located in the first region F1 having a smaller area, the positioning device 14 calculates the current position of the work vehicle 10 on the basis of the point positioning information. That is, in a case where a work start point is in the first region F1, the work vehicle 10 autonomously travels by using position information calculated based on the point positioning information calculated by the first positioning processing unit 151 while traveling in the first region F1. Therefore, the transmission processing unit 152 does not transmit the point positioning information to the base station server 20 while the work vehicle 10 is traveling in the first region F1.

Thereafter, when the work vehicle 10 enters the second region F2 having a larger area, the transmission processing unit 152 transmits the point positioning information in the second region F2 calculated by the first positioning processing unit 151 to the base station server 20. Therefore, the base station server 20 selects the base station 30B, generates correction information corresponding to the base station 30B, and transmits the correction information to the positioning device 14. When the positioning device 14 acquires the correction information from the base station server 20 and the RTK positioning of the work vehicle 10 based on the correction information becomes possible, the transmission processing unit 152 transmits, to the base station server 20, the same positioning information as the point positioning information transmitted immediately before the RTK positioning of the work vehicle 10 based on the correction information corresponding to the base station 30B becomes possible. That is, the transmission positioning information transmitted from the positioning device 14 to the base station server 20 is fixed to the point positioning information obtained immediately before the RTK positioning of the work vehicle 10 based on the correction information corresponding to the base station 30B becomes possible.

Then, when the RTK positioning of the work vehicle 10 based on the correction information corresponding to the base station 30B becomes possible, the second positioning processing unit 154 calculates the position of the work vehicle 10 on the basis of the correction information corresponding to the base station 30B in each case where: the work vehicle 10 travels in the first region F 1; and the work vehicle 10 travels in the second region F2.

Therefore, after the point positioning information is fixed, the positioning device 14 can calculate the current position of the work vehicle 10 by using the correction information corresponding to the base station 30B, regardless of the position (the first region F1 or the second region F2) of the work vehicle 10 in the field F. In this manner, the positioning device 14 calculates the current position of the work vehicle 10 by point positioning in the first region F 1 having a smaller area, and thereafter, in a case where the work vehicle moves to the second region F2 having a larger area, then the positioning device 14 calculates the current position of the work vehicle 10 by RTK positioning using the correction information corresponding to the base station 30B closer to the second region F2.

Note that, in a case where the work vehicle 10 is initially located in the second region F2 having a larger area, it is possible to calculate the current position of the work vehicle 10 by using the correction information corresponding to the base station 30B in the entire field F by the configuration described in the above embodiment.

In each of the above embodiments, the work vehicle is taken as an example of the moving object (mobile station) of the present invention. However, the moving object of the present invention is not limited to the work vehicle. For example, the moving object of the present invention may be a worker who moves while carrying the positioning device 14. The positioning device of the present invention may be a device mounted on a vehicle in advance or may be a portable device that can be brought into (detachable from) the vehicle. In each of the above embodiments, there has been described the example where the work vehicle 10 autonomously travels based on the position information calculated by the positioning device 14. However, the use form of the position information calculated by the positioning device 14 is not limited to the autonomous traveling of the work vehicle 10. For example, the position information calculated by the positioning device 14 may be used for processing of creating a traveling route of the work vehicle 10 or processing of creating a traveling track along which the work vehicle 10 has traveled during work.

## Claims

1. A positioning method comprising:
performing first positioning for calculating a position of a moving object on the basis of a satellite signal received from a satellite;
transmitting positioning information corresponding to the position of the moving object to a base station server that selects one base station from among a plurality of base stations on the basis of the position of the moving object;
acquiring, from the base station server, correction information generated based on a satellite signal received by the one base station from the satellite; and
performing second positioning for calculating the position of the moving object on the basis of the correction information, wherein
when the second positioning of the moving object based on first correction information corresponding to a first base station that is the one base station becomes possible, the same positioning information as the positioning information obtained immediately before the second positioning of the moving object based on the first correction information becomes possible is transmitted to the base station server.

2. The positioning method according to claim 1, wherein
when the second positioning of the moving object based on the first correction information becomes possible, the first correction information generated based on a satellite signal received by the first base station from the satellite is acquired from the base station server, and the position of the moving object is calculated on the basis of the first correction information.

3. The positioning method according to claim 2, wherein
when the second positioning of the moving object based on the first correction information becomes possible, the first correction information is acquired from the base station server, and the position of the moving object is calculated on the basis of the first correction information in each case where: the moving object is located in a place closer to the first base station than to a second base station; and the moving object is located in a place closer to the second base station than to the first base station.

4. The positioning method according to claim 3, wherein
when the second positioning of the moving object based on the first correction information becomes possible, the first correction information is acquired from the base station server, and the position of the moving object is calculated on the basis of the first correction information even in a case where the moving object moves to the place closer to the second base station from the place closer to the first base station.

5. The positioning method according to any one of claims 1 to 4, wherein
when the second positioning of the moving object based on the first correction information becomes impossible, the positioning information corresponding to the position of the moving object is transmitted to the base station server after the second positioning of the moving object based on the first correction information becomes impossible.

6. The positioning method according to any one of claims 1 to 5, wherein:
the moving object is a work vehicle that travels in a field located between the first base station and the second base station;
the field includes a first region closer to the first base station than an intermediate point between the first base station and the second base station and a second region closer to the second base station than the intermediate point; and
when the second positioning of the moving object based on the first correction information becomes possible, the position of the moving object is calculated based on the first correction information in each case where: the work vehicle travels in the first region; and the work vehicle travels in the second region.

7. The positioning method according to claim 1, wherein:
the moving object is a work vehicle that travels in a field located between the first base station and a second base station;
the field includes two divided regions divided at an intermediate point between the first base station and the second base station;
the positioning information corresponding to a first divided region having a larger area of the two divided regions is transmitted to the base station server;
the correction information generated based on a satellite signal received from the satellite by a base station closer to the first divided region between the first base station and the second base station is acquired; and
the position of the moving object is calculated based on the correction information.

8. The positioning method according to claim 7, wherein
when the second positioning of the moving object based on the correction information becomes possible, the position of the moving object is calculated based on the correction information in each case where: the work vehicle travels in the first region; and the work vehicle travels in the second region.

9. The positioning method according to any one of claims 1 to 8, wherein
in a case where a distance between the moving object and the one base station is less than a predetermined distance, the second positioning of the moving object based on the correction information corresponding to the one base station becomes possible, and, in a case where the distance between the moving object and the one base station is equal to or more than the predetermined distance, the second positioning of the moving object based on the correction information corresponding to the one base station becomes impossible.

10. The positioning method according to any one of claims 1 to 9, wherein: the positioning information includes at least longitude information, latitude information, and time information; and
when the second positioning of the moving object becomes possible, the same latitude information and longitude information as the longitude information and the latitude information obtained immediately before the second positioning of the moving object becomes possible are transmitted to the base station server.

11. A positioning device comprising:
a first positioning processing unit that performs first positioning for calculating a position of a moving object on the basis of a satellite signal received from a satellite;
a transmission processing unit that transmits positioning information corresponding to the position of the moving object calculated by the first positioning processing unit to a base station server that selects one base station from among a plurality of base stations on the basis of the position of the moving object calculated by the first positioning processing unit;
an acquisition processing unit that acquires, from the base station server, correction information generated based on a satellite signal received by the one base station from the satellite; and
a second positioning processing unit that performs second positioning for calculating the position of the moving object on the basis of the correction information acquired by the acquisition processing unit, wherein
when the second positioning of the moving object based on first correction information corresponding to a first base station that is the one base station becomes possible, the transmission processing unit transmits, to the base station server, the same positioning information as the positioning information obtained immediately before the second positioning of the moving object based on the first correction information becomes possible.

12. A work vehicle comprising:
the positioning device according to claim 11; and
a control device that performs traveling processing on the basis of position information calculated by the positioning device.

13. A positioning program for causing one or a plurality of processors to execute:
performing first positioning for calculating a position of a moving object on the basis of a satellite signal received from a satellite;
transmitting positioning information corresponding to the calculated position of the moving object to a base station server that selects one base station from among a plurality of base stations on the basis of the calculated position of the moving object;
acquiring, from the base station server, correction information generated based on a satellite signal received by the one base station from the satellite; and
performing second positioning for calculating the position of the moving object on the basis of the correction information, wherein
when the second positioning of the moving object based on first correction information corresponding to a first base station that is the one base station becomes possible, the same positioning information as the positioning information obtained immediately before the second positioning of the moving object based on the first correction information becomes possible is transmitted to the base station server.
